# EUROPEAN PATENT SPECIFICATION

(11) **EP 3 848 602 B1**
(45) Date of publication and mention of the grant of the patent: **04.09.2024**
(21) Application number: 19856554.1
(22) Date of filing: 04.09.2019
(51) Int. Cl.: F16C 33/38, F16C 19/16, F16C 33/66, F16C 37/00, F16C 33/78

(54) **ROLLING BEARING AND SPINDLE DEVICE EQUIPPED WITH ROLLING BEARING**
WÄLZLAGER UND SPINDELVORRICHTUNG MIT WÄLZLAGER
PALIER À ROULEMENT ET DISPOSITIF À BROCHE ÉQUIPÉ D'UN PALIER À ROULEMENT

(30) Priority: 07.09.2018 JP 2018167601
(43) Date of publication of application: 14.07.2021
(73) Proprietor: NTN Corporation, Osaka-shi, Osaka 550-0003 (JP)
(72) Inventor: KOYAMA, Mineo, Kuwana-shi, Mie 511-8678 (JP)
(74) Representative: Patent- und Rechtsanwälte Behrmann Wagner PartG mbB
(86) International application number: PCT/JP2019/034854
(87) International publication number: WO 2020/050337

(56) References cited:
- FR-A- 1 385 198
- JP-A- 2002 323 048
- JP-A- 2008 240 827
- JP-A- 2009 138 897
- JP-A- 2015 117 804
- JP-A- 2015 117 804
- JP-A- 2016 023 719
- JP-A- 2017 002 971
- JP-A- 2017 172 650
- JP-A- 2017 172 650

## Description

### CROSS REFERENCE TO THE RELATED APPLICATION

This application is based on and claims Convention priority to Japanese patent application No. 2018-167601, filed September 7, 2018.

### BACKGROUND OF THE INVENTION

### (Field of the Invention)

The present invention relates to a rolling bearing for, e.g., a spindle of a machine tool and to a spindle apparatus including the rolling bearing. In particular, the present invention relates to a technology applied to a ball bearing for a compact spindle of a motor built-in type.

### (Description of Related Art)

Compact spindles often employ angular ball bearings which (1) have excellent high-speed performance, (2) cause small displacement of the spindles due to processing load, and (3) are advantageous in high-precision processing. Also, such spindles often employ grease lubrication which does not require auxiliary equipment, besides oil lubrication with air oil or oil mist etc.

Among the compact spindles, those of a motor built-in type experience heat generation in motors and bearings during continuous operation or high-speed operation. In order to suppress deterioration in processing accuracy due to thermal expansion of the spindles, compressed air for cooling is supplied to insides of the spindles. The compressed air is supplied from the back sides of the spindles so as to pass through the insides and is then exhausted from tip ends of the spindles. Thus, the compressed air also serves to prevent entry of cutting chips and cutting fluid or the like into the insides of the spindles (for example, Patent Documents 1, 2).

Document 2 discloses an angular ball bearing with a grease pocket only on one side of the inner peripheral surface of the outer ring.

### Document 4

describes a rolling bearing used for a main shaft of a machine tool to rotate at high speed. Document 5 discloses a non-contact seal for an angular ball bearing. Document 6 relates to anti-friction bearings and in particular, aims at an original and improved outer ring structure for anti-friction bearing. Document 7 also suggests a bearing apparatus to rotate at high speeds.

### [Related Document]

### [Patent Document]

[Patent Document 1] JP Laid-open Patent Publication No. 2016-23719
[Patent Document 2] JP Laid-open Patent Publication No. 2017-172650
[Patent Document 3] JP Laid-open Patent Publication No. 2009-275176
[Patent Document 4] JP 2008 240827 A
[Patent Document 5] JP 2015 117804 A
[Patent Document 6] FR 1 385 198 A
[Patent Document 7] JP 2002 323048 A

### SUMMARY OF THE INVENTION

In such a spindle structure, the compressed air passes through an inside of a bearing, and thereby the grease inside the bearing is gradually discharged to an outside of the bearing and decreases in amount. In some cases, seals are provided on both sides of the bearing in order to retain the grease inside the bearing. Because the spindle rotates at high speed, these seals cannot be of a contact type to avoid heat generation.

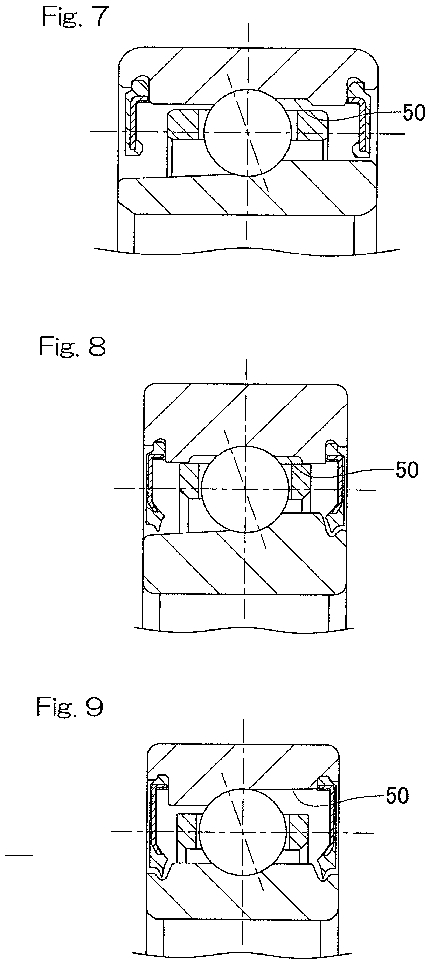

In contrast, where the compressed air is supplied through an inside of a bearing with non-contact seals, as shown in Fig. 8, the bearing can be constructed such that the compressed air is actively caused to pass between an inner diameter of a retainer and an outer diameter of an inner ring so as to retain a greater amount of the grease between an inner diameter of an outer ring and an outer diameter of the retainer and thereby extend bearing service life.

It is necessary to retain the grease as much as possible in a space defined between an inner diameter part of the outer ring and an outer diameter part of the retainer and adjacent to an outer-ring raceway surface and rolling elements. Oil content of the grease retained in this space, which serves as lubricating oil, adheres to surfaces of balls and is supplied to an inner-ring raceway surface and retainer pocket surfaces (surfaces in contact with the balls), allowing the bearing to smoothly operate for a long period of time.

As shown in Fig. 7 to Fig. 9, a conventional bearing is provided with a grease pocket 50 on an inner diameter surface of an outer ring so as to increase a retention amount of grease and thereby extend bearing service life (Patent Document 3). However, it is still desired to improve the grease retention to further extend the bearing service life.

An object of the present invention is to provide a rolling bearing which can have an improved retention amount of grease and longer service life as compared with those of a conventional structure, as well as a spindle apparatus including the rolling bearing.

### A rolling bearing of the present invention includes the limitations of independent claim 1

According to this constitution, provision of not only the grease pocket on the inner peripheral surface of the outer ring, but also the grease receiving recess on the outer peripheral surface of the retainer makes it possible to enlarge a space between the inner peripheral surface of the outer ring and the outer peripheral surface of the retainer, in particular, a space adjacent to a raceway surface of the outer ring and the rolling elements and to retain a greater amount of the grease in the enlarged space. Oil content of the grease retained in the enlarged space, which serves as lubricating oil, adheres to surfaces of the rolling elements and is supplied to a raceway surface of the inner ring and pocket surfaces of the retainer. Thus, it is possible to improve the retention of the grease and to smoothly supply the lubricating oil for a longer period of time, allowing the bearing to smoothly operate in a stable manner. Thus, the bearing service life can be extended as compared with that of a conventional structure.

The rolling bearing is an angular ball bearing, and the outer ring is provided with the grease pocket only on a part of the inner peripheral surface on a side opposite from a contact surface side, the part being adjacent to the raceway surface of the outer ring. In this case, it is possible to ensure a contact ellipse which is a contact surface between the raceway surface and each ball as well as to secure a relatively large area to provide the grease pocket.

The retainer may be an outer-ring guide type retainer configured to be guided by the inner peripheral surface of the outer ring. In this case, a part of the grease inside the bearing passes to a guide surface of the retainer, which is guided by the inner peripheral surface of the outer ring, so that excessive wear of the guide surface can be prevented. Therefore, the bearing can be operated at higher speed.

The retainer may be a rolling-element guide type retainer configured to be guided by the rolling elements. In this case, it is possible to enlarge a radial space between the grease receiving recess and the grease pocket as compared with that of a rolling bearing including an outer-ring guide type retainer and to further increase the retention amount of the grease. Therefore, the bearing service life can be extended as compared with that of a conventional structure.

A spindle apparatus of the present invention includes: a spindle; any of the rolling bearings as described above, the rolling bearing being configured to rotatably support the spindle; a motor configured to drive the spindle; and a housing which houses the spindle, the rolling bearing, and the motor. In this case, it is possible to increase the retention amount of the grease retained inside the rolling bearing, so that the spindle can be operated at higher speed.

The spindle apparatus may have a structure which allows cooling air to pass through an inside of the rolling bearing. In this case, the spindle apparatus and the rolling bearing can be cooled by the cooling air to suppress thermal expansion of the spindle apparatus and to suppress deterioration in processing accuracy. Although the grease inside the bearing is gradually discharged to an outside of the bearing by the cooling air passing through the inside of the rolling bearing and thus decreases in amount, the large amount of the grease retained in the enlarged space between the inner peripheral surface of the outer ring and the outer peripheral surface of the retainer allows the spindle apparatus to perform high-speed operation or continuous operation without hindrance.

Any combination of at least two constructions, disclosed in the appended claims should be construed as included within the scope of the present invention. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,
Fig. 1 is a sectional view of a rolling bearing according to an embodiment of the present invention;
Fig. 2 illustrates a part of an outer peripheral surface of a retainer of the rolling bearing in an enlarged manner;
Fig. 3 is a sectional view of a rolling bearing according to another embodiment of the present invention;
Fig. 4 is a sectional view of a rolling bearing according to yet another embodiment of the present invention;
Fig. 5 is a sectional view of a rolling bearing according to still another embodiment of the present invention;
Fig. 6 is a sectional view of a spindle apparatus of a motor built-in type in which any of the rolling bearings is applied;
Fig. 7 is a sectional view of a conventional example of a rolling bearing;
Fig. 8 is a sectional view of another conventional example of a rolling bearing; and
Fig. 9 is a sectional view of yet another conventional example of a rolling bearing.

### DESCRIPTION OF THE EMBODIMENTS

### First Embodiment

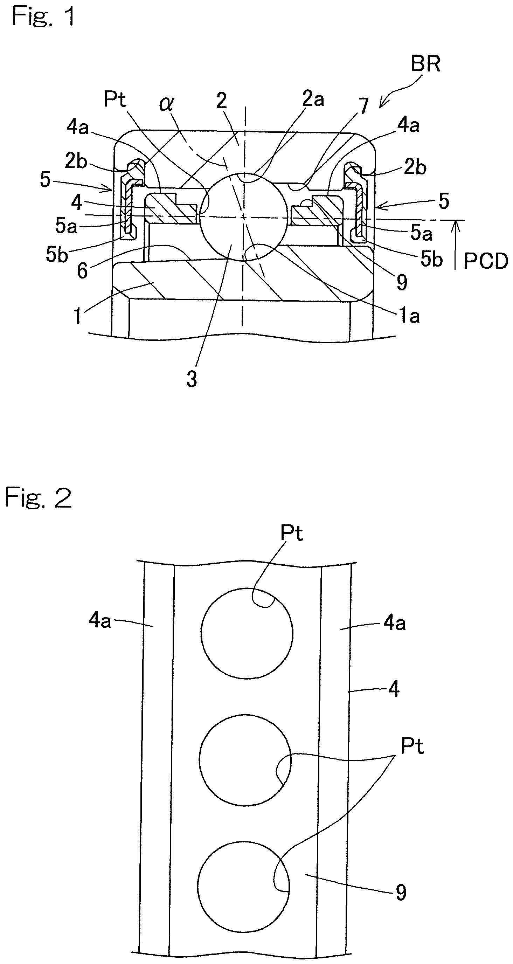

A rolling bearing BR according to an embodiment of the present invention will be described with reference to Fig. 1 and Fig. 2.

As shown in Fig. 1, the rolling bearing BR is an angular ball bearing and includes: an inner ring 1; an outer ring 2; a plurality of rolling elements 3 interposed between the inner and outer rings 1, 2; a retainer 4 configured to retain the plurality of rolling elements 3; and seals 5, 5 closing a bearing space. The rolling bearing BR contains grease filled in the bearing space and is used under grease lubrication. The rolling elements 3 are balls, and the rolling elements 3 are rotatably retained by the retainer 4 at predetermined intervals in a circumferential direction. The inner ring 1 has an outer peripheral surface (hereinafter, simply referred to as "inner-ring outer peripheral surface") formed with a raceway surface 1a, and the outer ring 2 has an inner peripheral surface (hereinafter, simply referred to as "outer-ring inner peripheral surface") formed with a raceway surface 2a, such that the raceway surfaces 1a, 2a have a predetermined contact angle with respect to the rolling elements 3. The inner-ring outer peripheral surface is provided with a counterbore 6 having an outer diameter which gradually decreases toward an outside in an axial direction, on one side of the raceway surface 1a, that is, on a side opposite from a direction in which the contact angle α is defined.

### Seal 5

The outer-ring inner peripheral surface has opposite axial end portions provided with the seals 5, 5 that are not in contact with the inner-ring outer peripheral surface. The outer-ring inner peripheral surface has seal attaching grooves 2b to which base end portions of the seals 5 on an outer diameter side are attached. Each of the seals 5 includes a core metal 5a constituted by a steel plate and an elastic body 5b covered by the core metal 5a. The core metal 5a includes an annular raised-plate part and a cylindrical part connecting to an outer peripheral edge portion of the raised-plate part so as to have an L-shaped cross section. A tip end portion of each seal 5 on an inner diameter side has a length sufficient to prevent inclination and deformation of the seal 5 and to ensure stable sealing performance when air passes through the inside of the bearing as described later and is lower than, for example, an inner peripheral surface of the retainer 4 in order to prevent leak of the grease inside the bearing.

### Grease Pocket

The outer-ring inner peripheral surface is provided with a grease pocket 7 recessed outward in a radial direction. The grease pocket 7 is provided only on a part of the outer-ring inner peripheral surface on a side opposite from a contact surface side, in which the part is adjacent to the raceway surface 2a. The grease pocket 7 is continuously formed over an entire circumference of the outer-ring inner peripheral surface on the side opposite from the contact surface side. The grease is retained in the grease pocket 7. The "part of the outer-ring inner peripheral surface on a side opposite from a contact surface side" refers to a part of the outer-ring inner peripheral surface on a side (right side of Fig. 1) opposite from a direction in which the contact angle α is defined and is a peripheral surface extending from the raceway surface 2a in one axial direction. On the other hand, the "part of the outer-ring inner peripheral surface on the contact surface side" refers to a part of the outer-ring inner peripheral surface in the direction in which the contact angle α is defined (left side of Fig. 1) and is a peripheral surface extending from the raceway surface 2a in the other axial direction.

### Retainer 4 and Grease Receiving Recess etc.

As shown in Fig. 1 and Fig. 2, the retainer 4 is an outer-ring guide type retainer configured to be guided by the outer-ring inner peripheral surface. For example, the retainer 4 is shaped as an annular body made of a resin material or the like and having a substantially rectangular cross section. The "cross section" refers to a cross section of the retainer 4 along a plane including its axis. The retainer 4 has an axially central part formed with pockets Pt for retaining the rolling elements 3 at a plurality of positions in the circumferential direction. The inner peripheral surface of the retainer 4 has a radial dimension smaller than a pitch circle diameter PCD of the rolling elements 3. The retainer 4 has guide surfaces 4a, 4a in opposite axial side parts of an outer peripheral surface of the retainer, each of the guide surfaces being larger than the pitch circle diameter PCD and smaller than the outer-ring inner peripheral surface.

The retainer 4 is provided with a grease receiving recess 9 which is recessed inward in the radial direction and extends in the circumferential direction in a region including the pockets Pt on the outer peripheral surface of the retainer. The grease receiving recess 9 are formed widely on opposite axial sides of the position of the pockets from the axial center of the retainer 4 and extends over the entire circumference of the outer peripheral surface of the retainer 4. The grease receiving recess 9 has one side edge portion in the axial direction (on the right side), which is located at an axial position corresponding to or outward from that of one side edge portion of the grease pocket 7. In addition, the dimension from the axial center of the retainer 4 to the one side edge portion is the same as the dimension from the axial center of the retainer 4 to the other side edge portion in the axial direction. The grease receiving recess 9 has a bottom surface whose diameter is larger than the pitch circle diameter PCD and smaller than the guide surfaces 4a.

### Effects and Advantages

According to the rolling bearing BR as described above, provision of not only the grease pocket 7 on the outer-ring inner peripheral surface, but also the grease receiving recess 9 on the outer peripheral surface of the retainer 4 makes it possible to enlarge a space between the outer-ring inner peripheral surface and the outer peripheral surface of the retainer 4, in particular, a space adjacent to the raceway surface 2a of the outer ring and the rolling elements 3 to retain a greater amount of the grease in the enlarged space. Oil content of the grease retained in the enlarged space, which serves as lubricating oil, adheres to surfaces of the rolling elements 3 and is supplied to the raceway surface 1a of the inner ring and pocket surfaces Pt of the retainer. Further, the retainer 4 is formed with the grease receiving recess 9 in a region recessed radially inward with respect to the guide surfaces 4a on both sides in the axial direction so that the effect of retaining the grease in the space adjacent to the raceway surface 2a of the outer ring and the rolling elements 3 is improved as compared to that of a case where the retainer is merely disposed at a greater distance from the outer ring 2. Thus, it is possible to improve the retention of the grease and to smoothly supply the lubricating oil for a longer period of time, allowing the bearing to smoothly operate in a stable manner. Thus, the bearing service life can be extended as compared with that of a conventional structure.

The rolling bearing BR is an angular ball bearing, in which the outer ring 2 is provided with the grease pocket 7 only on a part of the outer-ring inner peripheral surface, which is adjacent to the raceway surface 2a on the side opposite from the contact surface side. Therefore, it is possible to ensure a contact ellipse which is a contact surface between the raceway surfaces 2a and each ball as well as to secure a relatively large area to provide the grease pocket 7. Since the retainer 4 is an outer-ring guide type retainer configured to be guided by the outer-ring inner peripheral surface, a part of the grease inside the bearing passes to the guide surfaces 4a of the retainer 4, which are guided by the outer-ring inner peripheral surface, so that excessive wear of the guide surfaces 4a can be prevented. Therefore, the bearing can be operated at higher speed.

### Other Embodiments

In the following description, the same reference numerals are used to denote parts that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

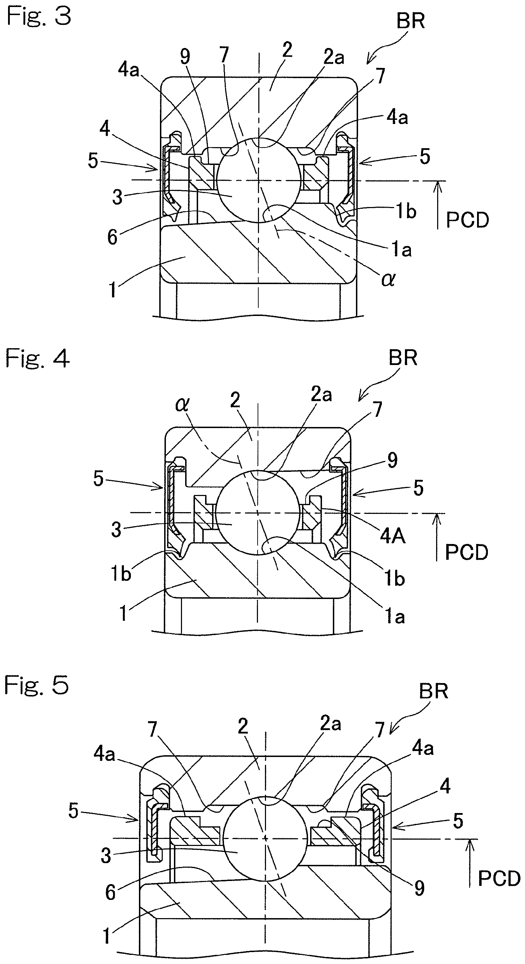

As shown in Fig. 3, grease pockets 7 may be provided on opposite sides of the outer-ring inner peripheral surface with respect to the raceway surface 2a of the outer ring. That is, the grease pocket 7 may be provided not only on the part of the outer-ring inner peripheral surface, which is adjacent to the raceway surface 2a of the outer ring on the side opposite from the contact surface side, but also on a part of the outer-ring inner peripheral surface, which is adjacent to the raceway surface 2a of the outer ring on the contact surface side. In this case, the retention amount of the grease can be increased further as compared with that of the embodiment as described above. In the present embodiment, the inner-ring outer peripheral surface is formed with a seal groove 1b on a side opposite to a counterbore side, and a tip end of the seal 5 on the inner diameter side is inserted into the seal groove 1b with a predetermined gap therebetween. This makes it possible to improve sealing performance as compared with that of the above embodiment which does not include the seal groove, to suppress leak of the grease from the bearing space, and to suppress entry of foreign matter into the bearing.

As shown in Fig. 4, the retainer 4A may be a rolling-element guide type retainer configured to be guided by the rolling elements 3 and may have the grease pocket 7 only on a part of the outer-ring inner peripheral surface on the side opposite from the contact surface side, in which the part is adjacent to the raceway surface 2a of the outer ring. The rolling bearing B is provided with a counterbore on the outer-ring inner peripheral surface on the side opposite from the contact surface side, the counterbore having an inner diameter which increases toward the axially outside and serving as the grease pocket 7. Note that the inner ring 1 of this example is not provided with a counterbore on the inner-ring outer peripheral surface, and both axial sides of the raceway surface 1a of the inner ring are provided with inner-ring outer peripheral surfaces each having a flat cylindrical shape.

According to this constitution as shown in Fig. 4, it is possible to enlarge the radial space between the grease receiving recess 9 and the grease pocket 7 and to further increase the retention amount of the grease, as compared with those of a rolling bearing including an outer-ring guide type retainer. Thus, the bearing service life can further be extended as compared with that of a conventional structure.

As shown in Fig. 5, the rolling bearing BR including the outer-ring guide type retainer 4 may be provided with the grease pockets 7 on both axial sides of the outer-ring inner peripheral surface, and the retainer 4 may be provided with the grease receiving recess 9. In this case, since the grease pockets 7 are enlarged further than that of the embodiment of Fig. 1, the retention amount of the grease can be increased further.

Although not illustrated, the rolling bearing BR may be an angular ball bearing without a seal or an angular ball bearing with a seal only on one side. The rolling bearing BR is not limited to an angular ball bearing and may be a deep groove ball bearing or a cylindrical roller bearing.

### Application to Spindle Apparatus

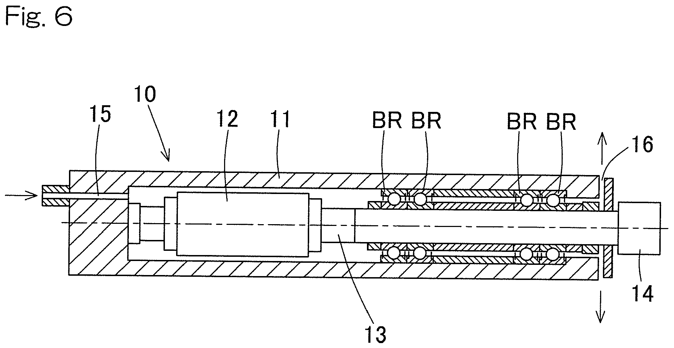

As shown in Fig. 6, any of the rolling bearings BR may be applied to a spindle apparatus 10 of a motor built-in type. The spindle apparatus 10 includes a housing 11; a motor 12 incorporated in the housing; and a spindle 13 coaxial with the motor 12. The housing 11 rotatably supports the spindle 13 through plural rows of rolling bearings BR, and a tool is removably attached to a spindle tip protruding from an opening part of the housing 11. The spindle apparatus 10 has a structure which allows cooling air (compressed air) to pass through an inside of the rolling bearings BR. The spindle apparatus 10 has a rear side provided with a supply opening 15 for supplying the compressed air into the housing 11, and the compressed air cools the motor 12 and the bearings BR. The compressed air is supplied from the rear side of the spindle apparatus 10 to successively cool the motor 12 and the rolling bearings BR and is discharged from an exhaust hole 16 on a front side of the spindle apparatus 10.

According to this constitution, the spindle apparatus 10 and the rolling bearings BR can be cooled by the cooling air to suppress thermal expansion of the spindle apparatus 10 and to suppress deterioration in processing accuracy. Although the grease inside the bearings is gradually discharged to an outside of the bearings by the cooling air passing through the insides of the rolling bearings BR and thus decreases in amount, the large amount of the grease retained in the enlarged space between the outer-ring inner peripheral surface and the outer peripheral surface of the retainer allows the spindle apparatus 10 to perform high-speed operation or continuous operation without hindrance.

Although the present invention has been described in connection with the embodiments thereof, the embodiments disclosed herein are merely examples in all respects, and are not to be taken as limiting the scope of the present invention in any way whatsoever. The scope of the present invention is to be determined by the appended claims, not by the above description, and is intended to include any change made within the scope of claims.

### [Reference Numerals]

- 1: Inner ring
- 2: Outer ring
- 3: Rolling element
- 4, 4A: Retainer
- 7: Grease pocket
- 9: Grease receiving recess
- 10: Spindle apparatus
- 12: Motor
- 13: Spindle
- BR: Rolling bearing
- Pt: Pocket

## Claims

1. An angular ball bearing comprising: an inner ring (1); an outer ring (2); a plurality of rolling elements (3) interposed between the inner ring (1) and the outer ring (2); and a retainer (4) configured to retain the plurality of rolling elements (3), the outer ring (2) having an inner peripheral surface formed with a grease pocket (7) recessed outward in a radial direction, wherein
the outer ring (2) is provided with the grease pocket (7) only on a part of the inner peripheral surface on a side opposite from a contact surface side, the part being adjacent to a raceway surface (2a) of the outer ring (2), and
the grease pocket (7) includes a flat part extending from the raceway surface (2a) of the outer ring (2)and an inclined part extending from the flat part and gradually inclined inward in the radial direction toward an outside in an axial direction, and
the retainer (4) is formed with pockets configured to retain the rolling elements (3) at a plurality of positions in a circumferential direction, and
the retainer (4) has an outer peripheral surface formed with a grease receiving recess (9) which is recessed inward in the radial direction and extends in the circumferential direction in a region including the pockets, and
the grease receiving recess (9) includes the side edge portion opposite from the contact surface side located at an axial position corresponding to or outward from an axial position of the side edge portion opposite from the contact surface side of the inclined part in the grease pocket (7).

2. The angular ball bearing as claimed in claim 1, wherein the retainer (4) is an outer-ring guide type retainer (4) configured to be guided by the inner peripheral surface of the outer ring.

3. The angular ball bearing as claimed in claim 1, wherein the retainer (4) is a rolling-element guide type retainer (4) configured to be guided by the rolling elements (3).

4. A spindle apparatus (10) comprising: a spindle; the angular ball bearing as claimed in any one of claims 1 to 3, the angular ball bearing being configured to rotatably support the spindle (13); a motor (12) configured to drive the spindle; and a housing that houses the spindle (13), the angular ball bearing, and the motor (12).

5. The spindle apparatus (10) as claimed in claim 4, wherein the spindle apparatus (10) has a structure which allows cooling air to pass through an inside of the angular ball bearing.

## Patentansprüche

1. Schrägkugellager, umfassend: einen Innenring (1); einen Außenring (2); eine Vielzahl von zwischen dem Innenring (1) und dem Außenring (2) angeordneten Wälzelementen (3); und einen zur Halterung der Vielzahl von Wälzelementen (3) ausgebildeten Käfig (4), wobei der Außenring (2) eine Innenumfangsfläche aufweist, die mit einem in einer radialen Richtung nach außen vertieften Schmiermittelreservoir (7) ausgebildet ist, wobei
der Außenring (2) auf einer einer Anlageflächenseite gegenüberliegenden Seite nur in einem Abschnitt der Innenumfangsfläche mit dem Schmiermittelreservoir (7) versehen ist, wobei der Abschnitt einer Lauffläche (2a) des Außenrings (2) benachbart ist, und
das Schmiermittelreservoir (7) einen sich von der Lauffläche (2a) des Außenrings (2) aus erstreckenden ebenen Abschnitt und einen sich von dem ebenen Abschnitt aus erstreckenden schrägen Abschnitt aufweist, der zu einer in einer Achsrichtung betrachtet äußeren Seite hin graduell in der radialen Richtung nach innen angeschrägt ist, und der Käfig (4) an einer Vielzahl von Stellen in einer Umfangsrichtung mit Taschen zur Halterung der Wälzelemente (3) ausgebildet ist und der Käfig (4) eine Außenumfangsfläche aufweist, die mit einer in der radialen Richtung nach innen vertieften und sich in einem die Taschen umfassenden Bereich in der Umfangsrichtung erstreckenden Schmiermittelaufnahmeausnehmung (9) ausgebildet ist, und
die Schmiermittelaufnahmeausnehmung (9) den Seitenrandabschnitt umfasst, welcher der Anlageflächenseite gegenüberliegt, die sich an einer axialen Position befindet, die einer axialen Position des Seitenrandabschnitts, welcher der Anlageflächenseite des schrägen Abschnitts in dem Schmiermittelreservoir (7) gegenüberliegt, entspricht oder außerhalb dieser angeordnet ist.

2. Schrägkugellager nach Anspruch 1, wobei der Käfig (4) ein außenringgeführter Käfig (4) ist, der durch die Innenumfangsfläche des Außenrings führbar ist.

3. Schrägkugellager nach Anspruch 1, wobei der Käfig (4) ein wälzelementgeführter Käfig (4) ist, der durch die Wälzelemente (3) führbar ist.

4. Spindelvorrichtung (10), umfassend: eine Spindel; das Schrägkugellager nach einem der Ansprüche 1 bis 3, wobei die Spindel (13) durch das Schrägkugellager drehbar lagerbar ist; einen Motor (12) zum Antrieb der Spindel; und ein die Spindel (13), das Schrägkugellager und den Motor (12) aufnehmendes Gehäuse.

5. Spindelvorrichtung (10) nach Anspruch 4, wobei die Spindelvorrichtung (10) eine Struktur aufweist, durch welche ein Inneres des Schrägkugellagers von Kühlluft durchströmbar ist.

## Revendications

1. Roulement à billes à contact oblique comprenant : une bague intérieure (1) ; une bague extérieure (2) ; une pluralité d'éléments roulants (3) interposés entre la bague intérieure (1) et la bague extérieure (2) ; et une cage (4) configurée pour retenir la pluralité d'éléments roulants (3), la bague extérieure (2) ayant une surface périphérique intérieure formée avec un réservoir de lubrifiant (7) encastré vers l'extérieur dans une direction radiale, dans lequel la bague extérieure (2) n'est munie du réservoir de lubrifiant (7) que sur une partie de la surface périphérique intérieure sur un côté opposé à un côté de surface de contact, la partie étant adjacente à une surface de piste de roulement (2a) de la bague extérieure (2), et
le réservoir de lubrifiant (7) comporte une partie plate s'étendant à partir de la surface de piste de roulement (2a) de la bague extérieure (2) et une partie inclinée s'étendant à partir de la partie plate et étant inclinée graduellement vers l'intérieur dans la direction radiale vers un côté extérieur dans une direction axiale et
la cage (4) est formée avec des poches configurées pour retenir les éléments roulants (3) à une pluralité de positions dans une direction circonférentielle et
la cage (4) a une surface périphérique extérieure formé avec un évidement de réception de lubrifiant (9) qui est encastré vers l'intérieur dans la direction radiale et s'étend dans la direction circonférentielle dans une région comprenant les poches et
l'évidement de réception de lubrifiant (9) comprend la partie de bord latéral opposée au côté de surface de contact situé à une position axiale correspondant à ou en dehors d'une position axiale de la partie de bord latéral opposée au côté de surface de contact de la partie inclinée dans le réservoir de lubrifiant (7).

2. Roulement à billes à contact oblique selon la revendication 1, dans lequel la cage (4) est une cage (4) de type guidé par la bauge extérieure et configurée pour être guidée par la surface périphérique intérieure de la bague extérieure.

3. Roulement à billes à contact oblique selon la revendication 1, dans lequel la cage (4) est une cage (4) de type guidé par les éléments roulants et configurée pour être guidée par les éléments roulants (3).

4. Appareil à broche (10) comprenant : une broche ; le roulement à billes à contact oblique selon l'une quelconque des revendications 1 à 3, le roulement à billes à contact oblique étant configuré pour supporter la broche (13) de manière rotative ; un moteur (12) configuré pour entraîner la broche ; et un boîtier logeant la broche (13), le roulement à billes à contact oblique et le moteur (12).

5. Appareil à broche (10) selon la revendication 4, dans lequel l'appareil à broche (10) a une structure qui permet à de l'air de refroidissement de s'écouler à travers un intérieur du roulement à billes à contact oblique.
